(19) Europäisches Patentamt
European Patent Office
Office européen des brevets

(11) Veröffentlichungsnummer: **0 087 517**
**B1**

(12) **EUROPÄISCHE PATENTSCHRIFT**

(45) Veröffentlichungstag der Patentschrift: **23.10.85**

(21) Anmeldenummer: **82111822.1**

(22) Anmeldetag: **20.12.82**

(51) Int. Cl.⁴: **C 07 C 67/08**, C 07 C 67/26, C 07 C 69/42, C 08 G 63/30, C 08 G 63/66, C 08 G 63/46

(54) **Verfahren zur Herstellung von Polyester- und/oder Polyester-polyether-polyolen.**

(30) Priorität: **16.01.82 DE 3201203**

(43) Veröffentlichungstag der Anmeldung: **07.09.83 Patentblatt 83/36**

(45) Bekanntmachung des Hinweises auf die Patenterteilung: **23.10.85 Patentblatt 85/43**

(84) Benannte Vertragsstaaten: **AT BE CH DE FR GB IT LI NL SE**

(56) Entgegenhaltungen:
**EP - A - 0 000 468**
**DD - A - 81 963**
**DE - A - 1 493 110**
**DE - B - 1 248 660**
**US - A - 3 585 185**
**US - A - 4 144 395**

(73) Patentinhaber: **BASF Aktiengesellschaft, Carl-Bosch-Strasse 38, D-6700 Ludwigshafen (DE)**

(72) Erfinder: **Marx, Matthias, Dr., Seebacher Strasse 49, D-6702 Bad Duerkheim (DE)**
Erfinder: **Straehle, Wolfgang, Dr., Hirschgasse 20, D-6900 Heidelberg (DE)**

**EP 0 087 517 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Zur Herstellung von flammbeständigen Polyurethanschaumstoffen finden als eine Aufbaukomponente vielfach Halogen- und Estergruppen enthaltene Polyetherpolyole Anwendung.

Nach Angaben der DE-AS 1 923 936 (US 3 585 185) werden derartige Polyester-polyether-polyole durch Umsetzung von Polyether-polyolen mit halogenhaltigen Carbonsäureanhydriden, insbesondere Tetrabrom- oder Tetrachlorphthalsäureanhydrid, zu Carbonsäurehalbestern und anschließender Oxalkylierung der freien Carboxylgruppen mit Alkylenoxiden erhalten.

Die Oxalkylierung wird üblicherweise in Gegenwart von Basen, beispielsweise Alkalihydroxiden oder -alkoholaten, oder Säuren als Katalysator durchgeführt. Nachteilig hierbei ist, daß die Katalysatoren aufgrund ihrer geringen Selektivität nicht nur die Oxalkylierung der Carboxylgruppen, sondern auch die Addition von Alkylenoxiden an die resultierenden oder bereits vorhandenen Hydroxylgruppen der Polyester- oder Polyether-polyole beschleunigen. Um eine vollständige Veresterung aller Carboxylgruppen sicherzustellen, muß daher mit einem großen Überschuß an Alkylenoxiden bei gleichzeitig langer Reaktionsdauer oxalkyliert werden. Nachteilig ist ferner, daß die Katalysatoren nach beendeter Umsetzung wieder aus dem Reaktionsgemisch abgetrennt werden müssen, wozu langwierige und kostspielige Reinigungsoperationen erforderlich sind.

Nach Angaben der US-A-4 144 395 (DE-A-2 849 549) können Polyether-polyester-polyole mit verbesserter Farbe und in kürzeren Reaktionszeiten durch Umsetzung von Polyether-polyolcarbonsäurehalbestern mit Alkylenoxiden in Gegenwart von 50 bis 100 ppm Trialkylamin als Katalysator hergestellt werden. Da der basische Katalysator die Oxalkylierung an der Hydroxyl- und der Carboxylgruppe beschleunigt, ist die Reaktion nicht selektiv auf die Carboxylgruppe beschränkt, so daß das Alkylenoxid im Überschuß, bezogen auf die Carboxylgruppe, verwendet werden muß.

Um eine nachträgliche Reinigung zu vermeiden, wird gemäß EP-A-00 468 die Oxalkylierung von chlorhaltigen Phthalsäurehalbestern vorzugsweise in Abwesenheit von Katalysatoren durchgeführt. Bei der unkatalysierten Oxalkylierung ist jedoch ebenfalls ein großer Alkylenoxidüberschuß notwendig, um alle Carboxylgruppen zu verestern. Nachteilig ist außerdem, daß die nicht umgesetzten Alkylenoxide, bis zu 15 Gew.-% der eingesetzten Menge, abdestilliert und entsorgt werden müssen, was sowohl die Wirtschaftlichkeit dieses Verfahrens als auch dessen Umweltfreundlichkeit in Frage stellt.

Bekannt ist außerdem die Veresterung von Carbonsäuren mit Alkylenoxiden in Gegenwart von Katalysatoren, wie z. B. Schwefelsäure, Natriumacetat, Eisen(III)-chlorid u. a. (Methoden der organischen Chemie, Band VIII, Houben-Weyl, Georg Thieme Verlag, Stuttgart 1952, Seiten 531—533).

Gesättigte und ungesättigte organische Mono- und Polycarbonsäuren, insbesondere solche mit 1 bis 20 Kohlenstoffatomen, können nach Angaben der DE-B-1 248 660 mit Alkylenoxiden bei erhöhter Temperatur in Gegenwart von Thioethern als Katalysator zu Glykolmonoestern umgesetzt werden. Nicht erwähnt wird jedoch die Verwendung von nicht destillierbaren Polyether-polyol-carbonsäurehalbestern als Ausgangskomponente, die sich hinsichtlich Struktur und chemische Eigenschaften grundsätzlich von den beispielhaft genannten Mono- und Polycarbonsäuren unterscheiden.

Zur Herstellung von Polyurethanen aus organischen Polyisocyanaten und Verbindungen mit reaktiven Wasserstoffatomen werden für verschiedene Anwendungsbereiche Polyether-polyole mit hochreaktiven Hydroxylgruppen benötigt. Diese können durch Einführung von primären Hydroxylgruppen, beispielsweise durch Oxethylierung von üblichen Polyether-polyolen hergestellt werden. Hierzu ist jedoch ein großer Ethylenoxidüberschuß erforderlich, der zu hydrophilen Polyoxyethylensegmenten führt, welche den daraus hergestellten Polyurethanen hydrophile Eigenschaften verleihen. Der hydrophile Charakter ist jedoch für wichtige Anwendungsgebiete von Polyether-polyolen, z. B. zur Herstellung von Schaumstoffen, von Nachteil.

Hydrophile Polyurethanschaumstoffe, beispielsweise für Isolierzwecke oder als Polstermaterial, erleiden durch eine Wasseraufnahme eine unkontrollierbare Beeinträchtigung ihrer mechanischen Eigenschaften, unterliegen verstärkt einem hydrolytischen Abbau und einem Verlust an thermischer Isolierfähigkeit.

Die Aufgabe der vorliegenden Erfindung bestand darin, Carboxylgruppen enthaltende Polyester- und/oder Polyester-polyether-polyole mit Alkylenoxiden zu verestern. Eine andere Aufgabe war es, hochreaktive Polyester- und/oder Polyester-polyether-polyole mit einem geringen Gehalt an vorzugsweise endständigen polymerisierten Ethylenoxidgruppen herzustellen.

Diese Aufgaben wurden gelöst durch ein Verfahren zur Herstellung von Polyester- und/oder Polyester-polyether-polyolen durch Umsetzung von Polyolen mit Carbonsäureanhydriden zu Carbonsäurehalbestern und anschließende Oxalkylierung der Carbonsäurehalbester mit Alkylenoxiden, das dadurch gekennzeichnet ist, daß man ein Mol Alkylenoxid pro Carboxylgruppe des Carbonsäurehalbesters verwendet und die Oxalkylierung in Gegenwart von 0,001 bis 0,1 Mol mindestens eines Thio-Dialkylenglykols pro Carboxylgruppe des Carbonsäurehalbesters durchführt.

Überraschenderweise werden bei der Oxalkylierung in Gegenwart von Thio-dialkylenglykolen als Katalysator zur Absättigung der Carboxylgruppen wesentlich geringere Mengen an Alkylenoxiden benötigt als bei den bisher bekannten Verfahren. Mit Ethylenoxid veresterte Polyester-polyether-polyole besitzen eine geringere Hydrophilie als Polyether-polyole mit endständigen Polyoxyethylenblökken. Vorteilhaft ist ferner, daß die Thio-dialkylenglykole im Reaktionsgemisch verbleiben können und nicht durch aufwendige Reinigungsverfahren abgetrennt werden müssen.

Das erfindungsgemäße Verfahren kann durch folgende Reaktionsgleichung veranschaulicht werden

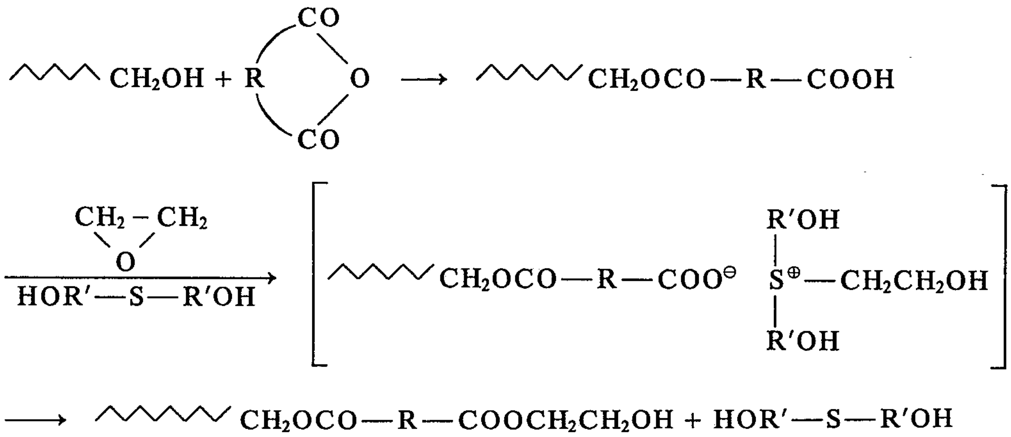


Zur Herstellung der Polyester- und/oder Polyester-polyether-polyole werden zunächst aus Polyolen mit 2 bis 6, vorzugsweise 2 bis 3 und insbesondere 2 Hydroxylgruppen oder Polyolgemischen und einem Carbonsäureanhydrid oder -gemisch bei Temperaturen von 50 bis 150° C, vorzugsweise von 90 bis 130° C und Reaktionszeiten von 2 bis 10 Stunden, vorzugsweise von 3 bis 5 Stunden Carbonsäurehalbester hergestellt. Die Aufbaukomponenten werden hierzu in solchen Mengen zur Reaktion gebracht, daß pro Mol Polyol 1 bis 3 Mole, vorzugsweise ein Mol Carbonsäureanhydrid und pro Anhydridgruppe 2 bis 6, vorzugsweise 2 Hydroxylgruppen in der Reaktionsmischung vorliegen.

Die erhaltenen Carbonsäurehalbester werden danach in Gegenwart von 0,001 bis 0,1 Molen, vorzugsweise 0,002 bis 0,05 Molen Thio-dialkylenglykol pro Carboxylgruppe als Katalysator und einem Mol Alkylenoxid pro Carboxylgruppe bei Temperaturen von 80 bis 160° C, vorzugsweise 90 bis 130° C, bei Normaldruck oder vorzugsweise unter erhöhtem Druck von 0,5 bis 10 bar vorteilhafterweise in Gegenwart von unter den Reaktionsbedingungen inerten Gasen, wie Stickstoff, Helium u. a. oder deren Gemischen oxalkyliert. Nach Erreichen einer Säurezahl von kleiner als 1 wird die Oxalkylierung beendet. Sofern die Reaktionsmischung noch freies monomeres Alkylenoxid enthält, wird dieses zweckmäßigerweise unter vermindertem Druck abdestilliert.

Zu den zur Herstellung der Polyester- und/oder Polyester-polyether-polyolen verwendbaren Ausgangskomponenten ist folgendes auszuführen:

Zur Herstellung der Carbonsäurehalbester haben sich als Polyole bewährt 2 bis 6wertige, vorzugsweise 2- und 3wertige Alkohole mit Molekulargewichten von 62 bis 350, vorzugsweise von 62 bis 140 wie z. B. Ethylen-, 1,3- bzw. 1,2-Propylen-, 1,4-Butylen-, Diethylen-, Dipropylenglykol, 1,3-Pentan-, 1,5-Pentan-, 1,6-Hexan-, 1,7-Heptandiol, Glycerin, 1,1,1-Trimethylolpropan, 1,1,1-Trimethylolethan, Hexan-1,2,6-triol, $\alpha$-Methylglucosid, Pentaerythrit und Sorbitol. Vorzugsweise verwendet werden jedoch di- bis hexafunktionelle und insbesondere di- und/oder trifunktionelle Polyether-polyole mit Hydroxylzahlen von 30 bis 200 und vorzugsweise von 50 bis 110. ie Polyether-polyole können ihrerseits beispielsweise hergestellt werden durch Polyaddition von Alkylenoxiden wie z. B. 1,2- oder 2,3-Butylenoxid, 1,3-Propylenoxid oder vorzugsweise Ethylenoxid und/oder 1,2-Propylenoxid an übliche Startermoleküle, beispielsweise die oben genannten mehrwertigen Alkohole, in Gegenwart von sauren oder vorzugsweise basischen Katalysatoren oder durch Polymerisation von Tetrahydrofuran mit bekannten Katalysatoren wie z. B. Borfluoridetherat, Antimonpentachlorid oder Bleicherde. Die Polyole können einzeln oder in Form von Mischungen eingesetzt werden. Vorzugsweise verwendet werden Polypropylenether-glykole mit Molekulargewichten von 500 bis 3000.

Als Carbonsäureanhydride eignen sich gegebenenfalls substituierte aromatische Mono- oder Dianhydride und vorzugsweise gegebenenfalls halogensubstituierte aliphatische Anhydride. Im einzelnen seien beispielhaft genannt: aromatische Carbonsäureanhydride wie z. B. Phthalsäure-, Tetrachlorphthalsäure-, Tetrabromphthalsäureanhydrid, Trimellithsäureanhydrid und Pyromellithsäuredianhydrid und aliphatische Carbonsäureanhydride, wie z. B. Maleinsäure-, Dichlormaleinsäure-, Bernsteinsäure- und vorzugsweise Glutarsäureanhydrid.

Als Katalysatoren zur Oxalkylierung der Carboxylgruppen der Carbonsäurehalbester werden erfindungsgemäß Thio-dialkylenglykole verwendet. Bewährt haben sich beispielsweise Thio-dialkylenglykole mit 2 bis 6, vorzugsweise 2 bis 3 Kohlenstoffatomen im Alkylenrest. Beispielhaft genannt seien Thio-dihexylenglykol, Thio-dibutylenglykol und vorzugsweise Thio-dipropylen- und/oder Thio-diethylenglykol.

Zur Oxalkylierung der Carboxylgruppen werden 1,2-Propylenoxid und vorzugsweise Ethylenoxid eingesetzt.

Die nach dem erfindungsgemäßen Verfahren hergestellten Polyester- oder Polyester-polyether-polyole besitzen eine Säurezahl von kleiner als 1 und einen Gehalt an monomeren Alkylenoxiden von weniger als 1 Gew.-%.

Die Polyester- und Polyester-polyether-polyole sind wertvolle Hilfsmittel und Zwischenprodukte.

Polyester-polyether-polyole, hergestellt durch Veresterung von Carbonsäurehalbestern auf Basis von Polypropylenglykol und vorzugsweise Glutarsäureanhydrid mit einem Mol Ethylenoxid pro Carboxylgruppe, finden insbesondere Verwendung zur Polyurethanherstellung.

Die in den Beispielen genannten Teile sind Gewichtsteile.

## Beispiel 1

A) Herstellung eines Polypropylenether-glykol-glutarsäurehalbesters
In einem für Oxalkylierungen geeigneten Reaktor wurde unter einer Stickstoffatmosphäre aus 402,5 Teilen Dipropylenglykol und 2597 Teilen Propylenoxid mit 6 Teilen Kaliumhydroxid als Katalysator ein Polypropylenether-glykol mit einer OH-Zahl von 112 hergestellt.
Das rohe Polypropylenether-glykol wurde unter einer Stickstoffatmosphäre mit 684 Teilen Glutarsäureanhydrid versetzt und unter Rühren bei 100° C 4 Stunden in den Carbonsäurehalbester übergeführt.

B) Der erhaltene Polypropylenether-glykol-glutarsäurehalbester wurde mit 6 Teilen Thiodiethylenglykol gemischt, der Stickstoffdruck auf 2 bar eingestellt und bei 105° C über einen Zeitraum von 2 Stunden 290 Teile Ethylenoxid hinzugefügt. Man ließ das Ethylenoxid danach abreagieren bis der Druck einen konstanten Wert von 2,5 bar erreicht hatte, ließ die Reaktionsmischung abkühlen, entspannte, fügte 60 Teile eines Aluminium-Magnesiumsilikats (®Ambosol) hinzu und filtrierte.
Man erhielt 3900 Teile eines Hydroxy-polypropylenether-2-hydroxyethyl-glutarats mit einer Hydroxylzahl von 82 und einer Säurezahl von 0,1.

## Vergleichsbeispiel A

Man verfuhr analog den Angaben des Beispiels 1, verwendete jedoch keinen Oxethylierungskatalysator, so erhielt man ein Hydroxy-polypropylenether-2-hydroxyethyl-glutarat mit einer Hydroxylzahl von 90 und einer Säurezahl von 34.

## Vergleichsbeispiel B

Man verfuhr analog den Angaben des Vergleichsbeispiels A, verwendete jedoch anstelle von 290 Teilen 474 Teile Ethylenoxid, dann erhielt man ein Hydroxy-polypropylenether-2-hydroxyethylglutarat mit einer Hydroxylzahl von 93 und einer Säurezahl von 0,3.

Beispiel 1 und Vergleichsbeispiel A und B zeigen, daß man bei der katalysatorfreien Ethoxilierung zur Erzielung der gleichen Säurezahl eine erheblich größere Ethylenoxidmenge verwenden muß.

## Beispiel 2

In einem für Oxalkylierungen geeigneten Reaktor wurden 600 Teile eines Polypropylenether-triols mit einer Hydroxylzahl von 560, hergestellt aus Glycerin und Propylenoxid mit 188,7 Teilen Glycerin unter einer Stickstoffatmosphäre gemischt. Zu der Mischung fügte man 1896,7 Teile Tetrabromphthalsäureanhydrid und führte die Additionsreaktion bei 100° C in 5 Stunden unter Rühren zu Ende.

Der erhaltene Polypropylenethertriol-tetrabromphthalsäurehalbester wurde mit 3 Teilen Thio-diethylenglykol gemischt, der Stickstoffdruck auf 2 bar eingestellt und bei 105° C über einen Zeitraum von 4 Stunden 590 Teile Propylenoxid hinzugefügt. Man ließ das Propylenoxid danach abreagieren bis der Druck einen konstanten Wert von 2,5 bar erreicht hatte, kühlte die Reaktionsmischung ab, entspannte das Reaktionsgefäß, fügte zur Neutralisation 40 Teile eines Aluminium-Magnesiumsilikats hinzu und filtrierte das Endprodukt ab.

Man erhielt 3200 Teile eines Hydroxy-polypropylenether-triol-2-hydroxypropyl-phthalats mit einer Hydroxylzahl von 200 und einer Säurezahl von 0,5.

## Vergleichsbeispiel C

Man verfuhr analog den Angaben von Beispiel 2, verwendete jedoch anstelle von Thio-diethylenglykol 3 Teile Borfluorid-diethyletherat als Oxpropylierungskatalysator, so erhielt man ein Hydroxy-polypropylenether-triol-2-hydroxypropyl-phthalat mit einer Hydroxylzahl von 210 und einer Säurezahl von 30.

## Patentansprüche

1. Verfahren zur Herstellung von Polyester- und/oder Polyester-polyether-polyolen durch Umsetzung von Polyolen mit Carbonsäureanhydriden zu Carbonsäurehalbestern und anschließende Oxalkylierung der Carbonsäurehalbester mit Alkylenoxiden, dadurch gekennzeichnet, daß man ein Mol Alkylenoxid pro Carboxylgruppe des Carbonsäurehalbesters verwendet und die Oxalkylierung in Gegenwart von 0,001 bis 0,1 Mol mindestens eines Thio-dialkylenglykols pro Carboxylgruppe des Carbonsäurehalbesters durchführt.

2. Verfahren nach Anspruch 1, dadurch gekennzeichnet, daß man als Thio-dialkylenglykole Thiodiethylenglykol und/oder Thio-dipropylenglykol einsetzt.

3. Verfahren nach Anspruch 1, dadurch gekennzeichnet, daß man pro Carboxylgruppe des Carbonsäurehalbesters 0,002 bis 0,05 Mol Thio-dialkylenglykol verwendet.

4. Verfahren nach Anspruch 1, dadurch gekennzeichnet, daß man als Polyole di- bis hexafunktionelle Polyetherpolyole mit Hydroxylzahlen von 30 bis 200 verwendet.

5. Verfahren nach Anspruch 1, dadurch gekennzeichnet, daß man als Carbonsäureanhydrid Glutarsäureanhydrid verwendet.

6. Verfahren nach Anspruch 1, dadurch gekennzeichnet, daß man als Alkylenoxid Ethylenoxid verwendet.

## Claims

1. A process for the preparation of polyester polyols and/or polyester-polyether polyols by reacting a polyol with a carboxylic acid anhydride to give a carboxylic acid half-ester, and subsequently oxyalkylating the carboxylic acid half-ester with an alkylene oxide, wherein one mole of alkylene oxide is used per carboxyl group of the carboxylic acid halfester, and the oxyalkylation is carried out in the presence of from 0.001 to 0.1 mole of at least one thiodialkylene glycol per carboxyl group of the carboxylic acid half-ester.

2. A process as claimed in claim 1, wherein thiodiethylene glycol and/or thiodipropylene glycol are used as the thiodialkylene glycols.

3. A process as claimed in claim 1, wherein from 0.002 to 0.05 mole of thiodialkylene glycol is used per carboxyl group of the carboxylic acid half-ester.

4. A process as claimed in claim 1, wherein di- to hexafunctional polyether polyols with hydroxyl numbers of from 30 to 200 are used as the polyols.

5. A process as claimed in claim 1, wherein glutaric anhydride is used as the carboxylic acid anhydride.

6. A process as claimed in claim 1, wherein ethylene oxide is used as the alkylene oxide.

## Revendications

1. Procédé de préparation de polyester-polyols et(ou) de polyester-polyéther-polyols par réaction de polyols et d'anhydrides carboxyliques, suivie de l'alcoxylation des hémi-esters carboxyliques formés par des oxydes d'alcoylène, caractérisé en ce que l'on emploie 1 mole d'oxyde d'alcoylène par groupe carboxyle de l'hémi-ester carboxylique et réalise l'alcoxylation en présence de 0,001 à 0,1 mole d'au moins un thio-dialcoylène-glycol par groupe carboxyle de l'hémi-ester carboxylique.

2. Procédé suivant la revendication 1, caractérisé en ce que le thio-dialcoylène-glycol est choisi parmi le thio-diéthylène-glycol et(ou) le thio-dipropylène-glycol.

3. Procédé suivant la revendication 1, caractérisé en ce que l'on emploie entre 0,002 et 0,05 mole de thiodialcoylène-glycol par groupe carboxyle de l'hémi-ester carboxylique.

4. Procédé suivant la revendication 1, caractérisé en ce que les polyols sont choisis parmi les polyétherpolyols di- à hexa-fonctionnels avec des indices d'oxhdryle de 30 à 200.

5. Procédé suivant la revendication 1, caractérisé en ce que l'anhydride carboxylique utilisé est l'anhydride glutarique.

6. Procédé suivant la revendication 1, caractérisé en ce que l'oxyde d'alcoylène employé est l'oxyde d'éthylène.